# EUROPEAN PATENT APPLICATION

(11) **EP 4 600 306 A1**
(43) Date of publication of application: **13.08.2025**
(21) Application number: 23874746.3
(22) Date of filing: 28.09.2023
(51) Int. Cl.: C08L 71/08, C08G 65/40, C08K 3/013, C08K 7/04, C08L 71/10

(54) **COMPOSITION**

(30) Priority: 05.10.2022 JP 2022160841; 01.12.2022 JP 2022193075; 29.03.2023 JP 2023054192
(71) Applicant: Idemitsu Kosan Co.,Ltd., Tokyo 100-8321 (JP)
(72) Inventor: SENGA, Minoru, Tokyo 100-8321 (JP); SUGA, Koichi, Tokyo 100-8321 (JP)
(74) Representative: Hoffmann Eitle
(86) International application number: PCT/JP2023/035355
(87) International publication number: WO 2024/075619

(57) **Abstract**

A composition including an aromatic polyether which includes a structural unit represented by the following formula (1) and a structural unit represented by the following formula (2), wherein the amount of chlorine atom bonded is 10 to 10,000 ppm by mass and the amount of fluorine atom bonded is 10 to 10,000 ppm by mass, and an inorganic filler.

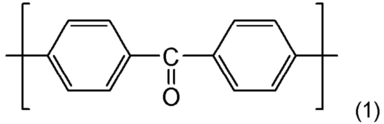

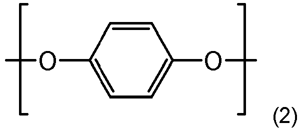

## Description

### Technical Field

The present invention relates to a composition.

Specifically, the present invention relates to a composition capable of efficiently exhibiting a reinforcing effect by an inorganic filler.

### Background Art

In Patent Document 1, it is disclosed that a specific aromatic polyether produced by causing a component having a specific polymerization catalysis to be present in a reaction system is mixed with a reinforcing material or a filler such as glass fiber, carbon fiber, aramid fiber, calcium carbonate and calcium silicate, and then it is used.

### Related Art Documents

### Patent Documents

[Patent Document 1] JP S64-065129A

### Summary of the Invention

However, in the prior art including Patent Document 1, it has been room for further improvement from the viewpoint of efficiently exhibiting the reinforcing effect by an inorganic filler.

One of the objects of the present invention is to provide a composition which can efficiently exhibit a reinforcing effect by an inorganic filler.

As a result of intensive studies, the present inventors have found that when an inorganic filler is blended in a specific aromatic polyether, the reinforcing effect by the inorganic filler can be efficiently exhibited, and the present inventors have completed the present disclosure.

According to the present invention, the following composition can be provided.
1. A composition comprising an aromatic polyether which comprises a structural unit represented by the following formula (1) and a structural unit represented by the following formula (2), wherein the amount of chlorine atom bonded is in the range of 10 to 10,000 ppm by mass and the amount of fluorine atom bonded is in the range of 10 to 10,000 ppm by mass, and
   an inorganic filler: 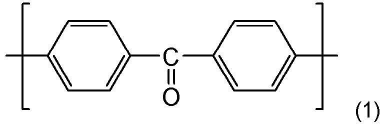 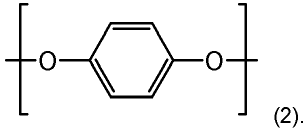
2. The composition according to 1, wherein the aromatic polyether comprises an aromatic polyether (a-1) to which the chlorine atom is bonded and an aromatic polyether (a-2) to which the fluorine atom is bonded.
3. The composition according to 1 or 2, wherein the aromatic polyether comprises an aromatic polyether (a-1') formed with 4,4'-dichlorobenzophenone is as a monomer component and an aromatic polyether (a-2') formed with 4,4'-difluorobenzophenone as a monomer component.
4. The composition according to any one of 1 to 3, wherein the aromatic polyether comprises a repeating unit represented by the following formula (3): 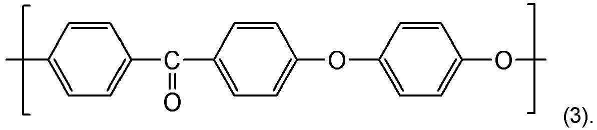
5. The composition according to any one of 1 to 4, wherein the average fiber length of the inorganic filler is 0.5 to 20 mm.
6. The composition according to any one of 1 to 5, wherein the amount of the inorganic filler is 5 to 100 parts by mass based on 100 parts by mass of the aromatic polyether.
7. The composition according to any one of 1 to 6, wherein the tensile strength thereof is greater than 1.81 times based on the tensile strength of the aromatic polyether alone.
8. The composition according to any one of 1 to 6, wherein the tensile strength thereof is 1.65 to 5.00 times based on the tensile strength of the aromatic polyether alone.
9. A composition comprising an aromatic polyether which comprises a structural unit represented by the following formula (1) and a structural unit represented by the following formula (2), wherein the amount of the total chlorine in the aromatic polyether is 10 to 10,000 ppm by mass and the amount of the total fluorine in the aromatic polyether is 10 to 10,000 ppm by mass, and
   an inorganic filler: 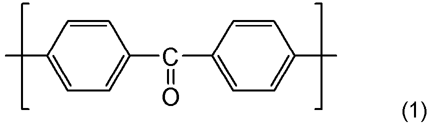 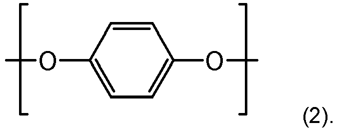
10. A composition comprising an aromatic polyether which comprises a structural unit represented by the following formula (1) and a structural unit represented by the following formula (2), wherein the proportion of the amount of the total chlorine in the aromatic polyether based on the total amount of the amount of the total chlorine in the aromatic polyether and the amount of the total fluorine in the aromatic polyether is 40 to 95% by mass, and
   an inorganic filler: 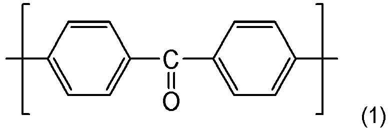 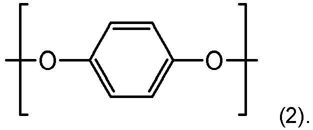
11. The composition according to 9 or 10, wherein the amount of the total chlorine in the aromatic polyether is 100 to 10,000 ppm by mass and the amount of the total fluorine in the aromatic polyether is 100 to 10,000 ppm by mass.
12. The composition according to any one of 9 to 11, wherein the aromatic polyether comprises a repeating unit represented by the following formula (3): 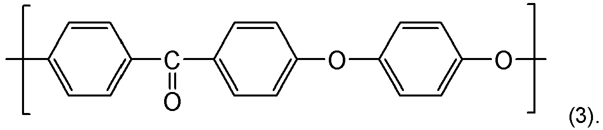
13. The composition according to any one of 9 to 12, wherein the average fiber length of the inorganic filler is 0.5 to 20 mm.
14. The composition according to any one of 9 to 13, wherein the amount of the inorganic filler is 5 to 100 parts by mass based on 100 parts by mass of the aromatic polyether.
15. The composition according to any one of 9 to 14, wherein the tensile strength thereof is greater than 1.81 times based on the tensile strength of the aromatic polyether alone.
16. The composition according to any one of 9 to 14, wherein the tensile strength thereof is 1.65 to 5.00 times based on the tensile strength of the aromatic polyether alone.

According to the present invention, it is possible to provide a composition capable of efficiently exhibiting a reinforcing effect by an inorganic filler.

As a result, for example, when a certain level of strength is imparted to the composition, the effect of reducing the amount of the inorganic filler can be obtained as compared with the conventional technique. By reducing the amount of the inorganic filler, the viscosity increase of the composition is suppressed and the kneading property is improved, and the effect of reducing the weight of the composition is also obtained.

### Mode for Carrying out the Invention

Hereinafter, the composition of the present invention will be described in detail.

In the present specification, the expression "x to y" as used herein represents the numerical range of "x or more and y or less". An upper limit value and a lower limit value described for the numerical range may be arbitrarily combined.

The composition according to an aspect of the present invention (also referred to as a first aspect) includes,
an aromatic polyether including a structural unit represented by the following formula (1) and a structural unit represented by the following formula (2), wherein the amount of chlorine atom bonded is in the range of 10 to 10,000 ppm by mass and the amount of fluorine atom bonded is in the range of 10 to 10,000 ppm by mass, and
an inorganic filler:

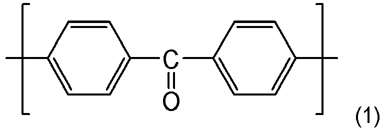

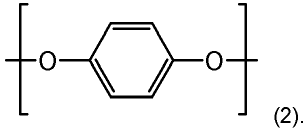

According to the composition of the present aspect, the effect of efficiently exhibiting the reinforcing effect by the inorganic filler can be obtained.

As a result, for example, when a certain level of strength is imparted to the composition, the effect of reducing the amount of the inorganic filler can be obtained as compared with the conventional technique. By reducing the blending amount of the inorganic filler, the viscosity increase of the composition is suppressed and the kneading property is improved, and the effect of reducing the weight of the composition is also obtained.

### (Aromatic polyether)

The following describes methods for measuring the amount of chlorine atom bonded to the aromatic polyether (CI-1), the amount of chlorine atom contained as free components in the aromatic polyether (CI-2, also referred to as "the amount of inorganic chlorine") and the total amount of these chlorine atom (CI-3, also referred to as "the amount of the total chlorine in the aromatic polyether"). Also, the measurement method of the amount of fluorine atom bonded to the aromatic polyether (F-1), the amount of fluorine atom contained as a free component in the aromatic polyether (F-2, also referred to as "the amount of the inorganic fluorine") and the total amount of these fluorine atom (F-3, also referred to as "the amount of the total fluorine in the aromatic polyether") is described. Further, the measurement method of the amount of potassium atom and the amount of sodium atom contained as free components in the aromatic polyether are also described.

### <Calculation of amount of chlorine atom bonded to aromatic polyether (Cl-1)>

a. The amount of the total chlorine in the aromatic polyether (*1: described below) is measured, and the amount of the total chlorine (ppm by mass) (CI-3) is calculated.
b. The amount of potassium (ppm by mass) is calculated from the measured value of potassium amount (*2: described below) in the aromatic polyether, and the amount of the inorganic chlorine (ppm by mass) (CI-2) is calculated by assuming that the equivalent number of moles of inorganic chlorine (the chlorine atom not bonded to the aromatic polyether) to potassium is included.
c. The amount of inorganic chlorine (ppm by mass) (CI-2) is subtracted from the amount of the total chlorine (ppm by mass) (CI-3) to calculate the amount of chlorine atom bonded to the aromatic polyether (ppm by mass) (CI-1).

### <Calculation of amount of fluorine atom bonded to aromatic polyether (F-1)>

a. The amount of the total fluorine in the aromatic polyether (*1: described below) is measured, and the amount of the total fluorine (ppm by mass) (F-3) is calculated.
b. The amount of sodium (ppm by mass) is calculated from the measured value of sodium amount (*2: described below) in the aromatic polyether, and the amount of the inorganic fluorine (ppm by mass) (F-2) is calculated by assuming that the equivalent number of moles of inorganic fluorine (the fluorine atom not bonded to the aromatic polyether) to sodium is included.
c. The amount of inorganic fluorine (ppm by mass) (F-2) is subtracted from the amount of the total fluorine (ppm by mass) (F-3) minus to calculate the amount of fluorine atom bonded to the aromatic polyether (ppm by mass) (F-1).

### (*1) Measurement method of total chlorine (CI-3) and total fluorine (F-3) in aromatic polyether

A sample (aromatic polyether) is introduced into a combustion furnace, combusted in a combustion gas containing oxygen, and the generated gas is collected in an absorbent liquid, and then the absorbent liquid is separated and quantified by ion chromatography. The quantitative values are each determined based on a calibration curve produced from a reference having a known concentration. Measurement conditions are described below.

### <Sample combustion>

Combustion apparatus: AQF-2100H manufactured by Nittoseiko Analytech Co., Ltd.
Combustion furnace preset temperature: 800°C on the front stage and 1,100°C on the rear stage
Argon flow rate: 400 ml/min
Oxygen flow rate: 200 ml/min
Absorbent: Hydrogen peroxide solution

### <Ion chromatograph>

Analyzer: Integrion manufactured by Thermo Fisher Scientific Inc.
Column: Using (Dionex IonPac AG12A) as a guard column and (Dionex IonPac AS12A) as a separating column (both columns are manufactured by Thermo Fisher Scientific Inc.)
Eluent: Na₂CO₃ (2.7 mmol/l)+NaHCO₃ (0.3 mmol/l)
Flow rate: 1.5 ml/min
Column temperature: 30°C
Measurement mode: A suppressor system
Detector: An electric conductivity detector

### (*2) Determination of amount of Potassium and amount of Sodium in aromatic polyether (amount of potassium atom and amount of sodium atom contained as free components in aromatic polyether)

Each amount of potassium atom (K) and sodium atom (Na) in the aromatic polyether pretreated with the following manner is measured at 589.592 nm for Na and at 766.481 nm for K by ICP emission spectroscopy.

The sample 1 g is weighed to the platinum dish, concentrated sulfuric acid is added to the dish, heated to carbonization treatment, and then the platinum dish is placed in an electric oven for ashing treatment at 550°C for 12 hours.

After the ashing treatment, hydrochloric acid is added, and then heat treatment is performed. After cooling, ultrapure water is added thereto to make a constant volume. When the sample contains an inorganic filler, hydrofluoric acid is added after the ashing treatment, and then the sample is heated and dried treatment, allowed to cool, hydrochloric acid is added, and heat treatment is performed. After cooling, ultrapure water is added thereto to make a constant volume.

The quantitative values are each determined based on a calibration curve produced from a reference having a known concentration. The calibration curve solution shall be the same as the hydrochloric acid concentration of the sample solution.

Regarding the calculation of the amount of chlorine atom bonded to the aromatic polyether (ppm by mass) (CI-1) and the amount of fluorine atom bonded to the aromatic polyether (ppm by mass) (F-1), when the monomers (reactants) 4,4'-difluorobenzophenone and 4,4'-dichlorobenzophenone used in synthesizing aromatic polyether remain in the aromatic polyether, the amount of fluorine atom contained as 4,4'-difluorobenzophenone and the amount of chlorine atom contained as 4,4'-dichlorobenzophenone in the aromatic polyether are quantified by the following methods, and the influences thereof are eliminated.

First, a solid-state sample (aromatic polyether) is pulverized with a blender, washed with acetone and water in this order, and dried in an explosion-proof dryer at 180°C. When a reaction mixture (product) immediately after a reaction for the production of the aromatic polyether is used as a sample, the product is cooled and solidified after the completion of the reaction to be used as the solid sample. The blender to be used is not particularly limited, and for example, 7010HS manufactured by Waring may be used.

Then, the dried sample 1 g is weighed in an eggplant flask, cyclohexanone 100 ml and boiling stone are added thereto, the mixture is heated to reflux with a mantle heater for an hour and allowed to cool to room temperature, and the solid content is removed by filtration.

And then, the obtained solutions are measured by gas chromatography to calculate the amount of 4,4'-difluorobenzophenone (ppm by mass) and the amount of 4,4'-dichlorobenzophenone (ppm by mass) in the sample. Here, the amount of 4,4'-difluorobenzophenone (ppm by mass) and the amount of 4,4'-dichlorobenzophenone (ppm by mass) in the sample are determined based on a calibration curve prepared from a reference of a known concentration. Measurement conditions of gas chromatograph are described below.

### <Measurement conditions of gas chromatograph>

Analyzer: Agilent Technologies 8890
GC column: Agilent Technologies DB-HeavyWAX (length 30 m, internal diameter 0.25 mm, film thicknesses 0.25 µm)
Inlet temperature: 250°C
Oven temperature: 250°C (constant)
Flow rate: 1 ml/min
Injection amount: 1 µl
Split ratio: 40:1
Detector: FID
Detector temperature: 250°C

The amount of fluorine atom (ppm by mass) contained as 4,4'-difluorobenzophenone and the amount of chlorine atom (ppm by mass) contained as 4,4'-dichlorobenzophenone in the aromatic polyether are converted from the following calculation formula. The amount of fluorine atom (ppm by mass) contained in the aromatic polyether as 4,4'- difluorobenzophenone = the amount of 4,4'-difluorobenzophenone in the sample (ppm by mass)/218.20 (molecular weight of 4,4'-difluorobenzophenone) × 19.00 (atomic weight of fluorine) × 2 The amount of chlorine atom (ppm by mass) contained in the aromatic polyether as 4,4'- dichlorobenzophenone = the amount of 4,4'-dichlorobenzophenone in the sample (ppm by mass)/251.11 (molecular weight of 4,4'-dichlorobenzophenone) × 35.45 (atomic weight of chlorine) × 2

When the amount of fluorine atom (ppm by mass) contained in the aromatic polyether as 4,4'-difluorobenzophenone and the amount of chlorine atom (ppm by mass) contained in the aromatic polyether as 4,4'-dichlorobenzophenone are both less than the lower limit of quantitation of 100 ppm by mass, the calculation results of the amount of fluorine atom (F-1) bonded to the aromatic polyether described above and the amount of chlorine atom (CI-1) bonded to the aromatic polyether described above are not affected (the impact is negligible).

When the amount of fluorine atom (ppm by mass) (F-4) contained as 4,4'-difluorobenzophenone in the aromatic polyether is 100 ppm by mass or more, the amount of fluorine atom (ppm by mass) (F-1) bonded to the aromatic polyether can be calculated by subtracting the amount of inorganic fluorine (ppm by mass) (F-2) from the amount of the total fluorine (ppm by mass) (F-3) and further subtracting the amount of fluorine atom (ppm by mass) (F-4) contained as 4,4'-difluorobenzophenone therefrom.

When the amount of chlorine atom (ppm by mass) (CI-4) contained as 4,4'-dichlorobenzophenone in the aromatic polyether is 100 ppm by mass or more, the amount of chlorine atom (ppm by mass) (F-1) bonded to the aromatic polyether can be calculated by subtracting the amount of inorganic chlorine (ppm by mass) (CI-2) from the amount of the total chlorine (ppm by mass) (CI-3) and further subtracting the amount of chlorine atom (ppm by mass) (CI-4) contained as 4,4'-dichlorobenzophenone therefrom.

In one embodiment, the amount of chlorine atom (CI-1) bonded to the aromatic polyether is 10 ppm by mass or more, 50 ppm by mass or more, 100 ppm by mass or more, 500 ppm by mass or more, 1,000 ppm by mass or more, or 2,000 ppm by mass or more, and is 10,000 ppm by mass or less, 6,000 ppm by mass or less, 5,000 ppm by mass or less, or 4,000 ppm by mass or less. Also, in one embodiment, the amount of chlorine atom (CI-1) bonded to the aromatic polyether is 10 to 10,000 ppm by mass, 500 to 6,000 ppm by mass, 1,000 to 5,000 ppm by mass, or 2,000 to 4,000 ppm by mass.

In one embodiment, the amount of inorganic chlorine (CI-2) in the aromatic polyether is 0 ppm by mass, 0 ppm by mass or more, 10 ppm by mass or more, 20 ppm by mass or more, 35 ppm by mass or more, or 50 ppm by mass or more, and it is 200 ppm by mass or less, 100 ppm by mass or less, 85 ppm by mass or less, or 70 ppm by mass or less. Also, in one embodiment, the amount of inorganic chlorine (CI-2) in the aromatic polyether is 0 to 200 ppm by mass, 10 to 100 ppm by mass, 20 to 85 ppm by mass, or 35 to 70 ppm by mass.

In one embodiment, the amount of the total chlorine (CI-3) in the aromatic polyether is 10 ppm by mass or more, 50 ppm by mass or more, 100 ppm by mass or more, 500 ppm by mass or more, 1,000 ppm by mass or more, or 2,000 ppm by mass or more, and is 10,000 ppm by mass or less, 6,000 ppm by mass or less, 5,000 ppm by mass or less, or 4,000 ppm by mass or less. Also, in one embodiment, the amount of the total chlorine (CI-3) in the aromatic polyether is 10 to 10,000 ppm by mass, 100 to 10,000 ppm by mass, 500 to 6,000 ppm by mass, 1,000 to 5,000 ppm by mass, or 2,000 to 4,000 ppm by mass.

In one embodiment, the amount of fluorine atom (F-1) bonded to the aromatic polyether is 10 ppm by mass or more, 50 ppm by mass or more, 100 ppm by mass or more, 300 ppm by mass or more, 500 ppm by mass or more, or 1,000 ppm by mass or more, and is 10,000 ppm by mass or less, 5,000 ppm by mass or less, 2,500 ppm by mass or less, 2,000 ppm by mass or less, 1,500 ppm by mass or less, or 1,200 ppm by mass or less. Also, in one embodiment, the amount of fluorine atom (F-1) bonded to the aromatic polyether is 10 to 10,000 ppm by mass, 100 to 5,000 ppm by mass, 300 to 2,500 ppm by mass, 500 to 2,000 ppm by mass, 500 to 1,500 ppm by mass, or 500 to 1,200 ppm by mass.

In one embodiment, the amount of inorganic fluorine (F-2) in the aromatic polyether is 0 ppm by mass, 0 ppm by mass or more, 10 ppm by mass or more, 20 ppm by mass or more, 30 ppm by mass or more, or 50 ppm by mass or more, and it is 200 ppm by mass or less, 100 ppm by mass or less, 90 ppm by mass or less, or 85 ppm by mass or less. Also, in one embodiment, the amount of inorganic fluorine (F-2) in the aromatic polyether is 0 to 200, 20 to 200 ppm by mass, 30 to 100 ppm by mass, 50 to 100 ppm by mass, or 50 to 90 ppm by mass.

In one embodiment, the amount of the total fluorine (F-3) in the aromatic polyether is 10 ppm by mass or more, 50 ppm by mass or more, 100 ppm by mass or more, 300 ppm by mass or more, 500 ppm by mass or more, or 1,000 ppm by mass or more, and is 10,000 ppm by mass or less, 5,000 ppm by mass or less, 2,500 ppm by mass or less, 2,000 ppm by mass or less, 1,500 ppm by mass or less, or 1,200 ppm by mass or less. Also, in one embodiment, the amount of the total fluorine (F-3) in the aromatic polyether is 10 to 10,000 ppm by mass, 50 to 5,000 ppm by mass, 100 to 2,500 ppm by mass, 100 to 2,000 ppm by mass, 300 to 2,000 ppm by mass, 300 to 1,500 ppm by mass, 500 to 1,500 ppm by mass, or 500 to 1,200 ppm by mass.

In one embodiment, the amount of potassium atom contained as a free component in the aromatic polyether is 20 ppm by mass or more, 30 ppm by mass or more, or 50 ppm by mass or more, and is 150 ppm by mass or less, 100 ppm by mass or less, or 80 ppm by mass or less. Also, in one embodiment, the amount of potassium atom contained as a free component in the aromatic polyether is 20 to 150 ppm by mass, 30 to 100 ppm by mass, or 30 to 80 ppm by mass.

In one embodiment, the amount of the sodium atom contained as a free component in the aromatic polyether is 20 ppm by mass or more, 30 ppm by mass or more, or 50 ppm by mass or more, and is 150 ppm by mass or less, 100 ppm by mass or less, or 90 ppm by mass or less. Also, in one embodiment, the amount of sodium atom contained as a free component in the aromatic polyether is 20 to 150 ppm by mass, 30 to 100 ppm by mass or 50 to 90 ppm by mass.

The aromatic polyether may include an aromatic polyether to which the chlorine atom is bonded (hereinafter referred to as "component (a-1)") and an aromatic polyether to which the fluorine atom is bonded (hereinafter referred to as "component (a-2)").

The amount of chlorine atom bonded to the component (a-1) is, for example, 10 ppm by mass or more, 50 ppm by mass or more, 100 ppm by mass or more, 500 ppm by mass or more, 1,000 ppm by mass or more, or 2,000 ppm by mass or more, and is 10,000 ppm by mass or less, 6,000 ppm by mass or less, 5,000 ppm by mass or less, or 4,000 ppm by mass or less. Also, the amount of chlorine atom bonded to the component (a-1) is, for example, 10 to 10,000 ppm by mass, 500 to 6,000 ppm by mass, 1,000 to 5,000 ppm by mass or 2,000 to 4,000 ppm by mass.

The amount of fluorine atom bonded to the component (a-2) is, for example, 10 ppm by mass or more, 50 ppm by mass or more, 100 ppm by mass or more, 300 ppm by mass or more, 500 ppm by mass or more, or 1,000 ppm by mass or more, and is 10,000 ppm by mass or less, 5,000 ppm by mass or less, 2,500 ppm by mass or less, 2,000 ppm by mass or less, 1,500 ppm by mass or less, or 1,200 ppm by mass or less. The amounts of fluorine atom bonded to the component (a-2) is, for example, 10 to 10,000 ppm by mass, 50 to 5,000 ppm by mass, 100 to 2,500 ppm by mass, 100 to 2,000 ppm by mass, 300 to 2,000 ppm by mass, 300 to 1,500 ppm by mass, 500 to 1,500 ppm by mass or 500 to 1,200 ppm by mass.

In one embodiment, the mass ratio of the component (a-1) and the component (a-2) is preferably 1:99 to 99:1, 21:79 to 99:1, 25:75 to 95:5, or 30:70 to 90:10, and more preferably 40:60 to 80:20.

In one embodiment, the composition includes, as the aromatic polyether, an aromatic polyether formed with 4,4'-dichlorobenzophenone as a monomer component (hereinafter referred to as "component (a-1')") and an aromatic polyether formed with 4,4'-difluorobenzophenone as a monomer component (hereinafter referred to as "component (a-2')").

The mass ratio of the component (a-1') and the component (a-2') is preferably 1:99 to 99:1, 21:79 to 99:1, 25:75 to 95:5, or 30:70 to 90:10, and more preferably 40:60 to 80:20.

In one embodiment, the structural unit represented by formula (1) is disposed at one or more ends of the main chain of aromatic polyether. In this instance, the terminal structure bonded to the structural unit may be a halogen atom. The halogen atom may be, for example, a chlorine atom (CI) or a fluorine atom (F).

In one embodiment, the structural unit represented by formula (2) is disposed at one or more ends of the main chain of aromatic polyether. In this instance, the terminal structure bonded to the structural unit may be, for example, a hydrogen atom (H) (when the terminal structure is the hydrogen atom (H), a hydroxyl group is formed with an oxygen atom (O) in the structural unit).

The terminal structure of the aromatic polyether may be, for example, a structure in which the above-described chlorine atom (CI) or hydroxy group is replaced with the hydrogen atom (H) or the like. Note that, the terminal structure may have a structure other than these exemplified above.

In one embodiment, the aromatic polyether includes a repeating unit represented by the following formula (3):

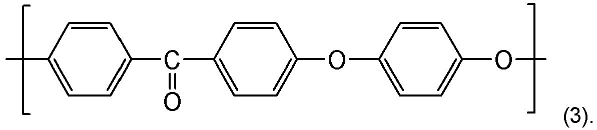

The structural unit represented by the formula (3) is a linker of the structural unit represented by the formula (1) and the structural unit represented by the formula (2).

In one embodiment, the aromatic polyether does not include any structure other than the structural units represented by the formula (1) and by the formula (2).

In one embodiment, the aromatic polyether includes structures other than the structural units represented by the formula (1) and by the formula (2) as long as the effects of the present invention is not impaired.

In one embodiment, the total amount (% by mass) of the structural unit represented by the formula (1) and the structural unit represented by the formula (2), based on the total monomer subjected to the reaction, is 50% by mass or more, 60% by mass or more, 70% by mass or more, 80% by mass or more, 90% by mass or more, 95% by mass or more, 97% by mass or more, 99% by mass or more, or 99.5% by mass or more, and it is 100% by mass or less, or 99.9% by mass or less, or 100% by mass.

In one embodiment, in the aromatic polyether, the molar ratio of the structural unit represented by the formula (1) and the structural unit represented by the formula (2) (the amount of the structural unit represented by the formula (1): the amount of the structural unit represented by the formula (2)) is 47.5:52.5 to 52.5:47.5, 48.0:52.0 to 52.0:48.0, 48.5:51.5 to 51.5:48.5, 49.0:51.0 to 51.0:49.0 or 49.5:50.5 to 50.5:49.5.

The number of moles of the structural unit represented by the formula (1) may be larger than, smaller than, or equal to the number of moles of the structural unit represented by the formula (2).

In one embodiment, an area ratio of the peak attributed to ¹H at the α-position of the hydroxyl group based on the peak attributed to ¹H of the main chain (hereinafter, referred to as "area ratio X") is less than 0.1% in ¹H-NMR determination of aromatic polyether.

The area ratio X is a value obtained by measuring ¹H-NMR described in the embodiment.

In one embodiment, the aromatic polyether is composed of one aromatic polyether having the same area ratio X.

In one embodiment, the aromatic polyether according to the present aspect is a blend of two or more aromatic polyethers having an area ratio X differing from each other. In this instance, the above-described area ratio X may be achieved in ¹H-NMR measurement of the mixtures. Here, the two or more aromatic polyethers may or may not include aromatic polyethers having an area ratio X of 0.1% or more.

The aromatic polyether having an area ratio X of 0.1% or more may have, for example, an area ratio X of 0.12%, or more or 0.14% or more, and may have an area ratio of 2.0% or less, 1.8% or less, or 1.6% or less. The area ratio X of aromatic polyether having the area ratio X of 0.1% or more may be, for example, 0.10 to 2.0%, 0.12 to 1.8% or 0.14 to 1.6%.

In one embodiment, when 4,4'-dichlorobenzophenone and hydroquinone are used to synthesize the aromatic polyether, the above-described area ratio X can be less than 0.1% by increasing the molar ratio of 4,4'-dichlorobenzophenone to hydroquinone greater than 1.00.

In one embodiment, when 4,4'-difluorobenzophenone and hydroquinone are used to synthesize the aromatic polyether, the above-described area ratio X can be less than 0.1% by increasing molar ratio of 4,4'-difluorobenzophenone to hydroquinone greater than 1.00.

The method for producing the aromatic polyether is not particularly limited.

In one embodiment, the method for producing the aromatic polyether includes:
producing the component (a-1'),
producing the component (a-2'), and
mixing the component (a-1') with the component (a-2').

The method for producing the component (a-1') is not particularly limited.

In one embodiment, the method for producing the component (a-1') includes reacting 4,4'-dichlorobenzophenone with hydroquinone.

4,4'-Dichlorobenzophenone and hydroquinone are monomers for polymerizing the component (a-1').

After the step of reacting 4,4'-dichlorobenzophenone with hydroquinone, as a copolymer of these compounds (monomeric units), the component (a-1') can be obtained.

4,4'-dichlorobenzophenone and hydroquinone are also commercially available.

In the following description, the "reaction mixture" is a reaction system from the start of the reaction of 4,4'-dichlorobenzophenone and hydroquinone to the completion of the reaction, preferably in the form of a solution containing a solvent to be described later, in addition to these monomers. The composition of the reaction mixture may change as the reaction proceeds. Usually, as the reaction proceeds, the concentration of the reactants (4,4'-dichlorobenzophenone and hydroquinone) in the reaction mixture decreases and the concentration of the product (component (a-1')) increases.

In addition, the "maximum temperature" of the reaction mixture is the maximum temperature reached by the reaction mixture in the process from the start of the reaction of 4,4'-dichlorobenzophenone and hydroquinone to the completion of the reaction (highest reached temperature).

In one embodiment, the maximum temperature of the reaction mixture may be 260°C or more, 265°C or more, 270°C or more, 275°C or more, 280°C or more, 285°C or more, 290°C or more, more than 290°C, 295°C or more, 300°C or more, 305°C or more, 310°C or more, 315°C or more, 320°C or more, 325°C or more, 330°C or more, or 335°C or more. The upper limit of the maximum temperature is not particularly limited, and is, for example, 360°C or less. In addition, the maximun temperature of the reaction mixture is, for example, 260 to 360°C, preferably more than 290°C and 360°C or less, and more preferably 295 to 360°C.

In one embodiment, the method for producing the component (a-1') includes raising the temperature of the reaction mixture to 150°C or higher, and then holding the temperature. A temperature at the time of the temperature holding is not particularly limited and may be, for example, 150 to 360°C. The time period for which the temperature holding is performed is not particularly limited, and may be, for example, 0.1 to 12 hours.

In one embodiment, the method for producing the component (a-1') includes raising the temperature of the reaction mixture to 150°C or higher, and then raising the temperature and holding the temperature at one time, or repeating the raising and holding the temperature at a plurality of time. The number of times of repetition is not particularly limited, and may be, for example, 2, 3, 4, 5, 6, 7, 8, 9 or 10.

By repeating the temperature increase and the temperature holding a plurality of times, the reaction can be efficiently advanced.

In one embodiment, the method for producing the component (a-1') includes holding the reaction mixture at 180 to 220°C for 0.5 to 2 hours, preferably 0.6 to 1.8 hours, and more preferably 0.7 to 1.5 hours (hereinafter also referred to as "temperature holding (i)"). As a result, the reaction can be accelerated while suppressing the volatilization of the raw material, and the component (a-1') having a higher molecular weight can be obtained.

In one embodiment, the method for producing the component (a-1') includes holding the reaction mixture at 230 to 270°C for 0.5 to 2 hours, preferably 0.6 to 1.8 hours, and more preferably 0.7 to 1.5 hours (hereinafter also referred to as "temperature holding (ii)"). As a result, the reaction can be accelerated while suppressing the volatilization of the raw material, and the component (a-1') having a higher molecular weight can be obtained.

In one embodiment, the method for producing the component (a-1') includes holding the reaction mixtures at 280 to 360°C for 1 to 8 hours, preferably 1 to 6 hours, and more preferably 1 to 4 hours (hereinafter also referred to as "temperature holding (iii)"). As a result, the component (a-1') having a desired molecular weight can be obtained.

In one embodiment, the method for producing the component (a-1') may include two or three members selected from the group consisting of temperature holdings (i) to (iii) described above. It is preferable that the two or three temperature holdings are performed in order of the method of lowest holding temperature. During the two or three temperature holdings, the method may include increasing the temperature of the reaction mixture.

A rate of heating in raising the temperature of the reaction mixture is not particularly limited, and may be, for example, 0.1 to 15°C/min, 0.1 to 10°C/min, 0.1 to 8°C/min or 0.1 to 5°C/min. As a result, the reaction can be accelerated while suppressing the volatilization of the raw materials, and the component (a-1') having a higher molecular weight can be obtained.

In one embodiment, in the method for producing the component (a-1'), the time from the point when the temperature of the reactant reaches 150°C to the point when the maximum temperature is reached is 2.0 to 10 hours.

In one embodiment, the reaction mixture includes a solvent. The reaction mixture including the solvent may be in the form of a solution. The solution may include 4,4'-dichlorobenzophenone and hydroquinone dissolved in the solvent.

The solvent is not particularly limited, and for example, a neutral polar solvent may be used. Examples of neutral polar solvents include N,N-dimethylformamide, N,N-diethylformamide, N,N-dimethylacetamide, N,N-diethylacetamide, N,N-dipropylacetamide, N,N-dimethylbenzoic acid amide, N-methyl-2-pyrrolidone, N-ethyl-2-pyrrolidone, N-isopropyl-2-pyrrolidone, N-isobutyl-2-pyrrolidone, N-n-propyl-2-pyrrolidone, N-n-butyl-2-pyrrolidone, N-cyclohexyl-2-pyrrolidone, N-methyl-3-methyl-2-pyrrolidone, N-ethyl-3-methyl-2-pyrrolidone, N-methyl-3,4,5-trimethyl-2-Pyrrolidone, N-methyl-2-piperidone, N-ethyl-2-piperidone, N-isopropyl-2-piperidone, N-methyl-6-methyl-2-piperidone, N-methyl-3-ethylpiperidone, dimethylsulfoxide, diethylsulfoxide, 1-methyl-1-oxosulfolane, 1-ethyl-1-oxosulfolane, 1-phenyl-1-oxosulfolane, N,N'-dimethylimidazolidinone, diphenylsulfone, and the like.

In one embodiment, the reaction mixture includes an aromatic sulfone, and the amount of solvent having a boiling point of 270°C to 330°C in the reaction mixture is 0 parts by mass or more and less than 1 part by mass based on 100 parts by mass of the aromatic sulfone. As a result, it becomes easier to control a reaction temperature.

The reaction mixture may include one or two or more types of solvents. In particular, it is preferable that the reaction mixture include only one type of solvent (single solvent) as a solvent. Thus, the method for producing it can be simplified.

In one embodiment, the reaction mixture includes a base. By including the base in the reaction mixture, the reaction is accelerated.

The base is not particularly limited, and for example, an alkali metal salt or the like is preferable. The alkali metal salt is not particularly limited, and examples thereof include an alkali metal carbonate, an alkali metal bicarbonate, an alkali metal hydride, and an alkali metal hydroxide.

Examples of the alkali metal carbonate include potassium carbonate, sodium carbonate, lithium carbonate, rubidium carbonate, cesium carbonate, and the like.

Examples of the alkali metal bicarbonate include lithium bicarbonate, sodium bicarbonate, potassium bicarbonate, rubidium bicarbonate, cesium bicarbonate, and the like.

Among these, potassium carbonate is particularly preferable.

These bases may be used alone, or two or more types thereof may be used in combination.

In one embodiment, the reaction mixture includes potassium carbonate.

In one embodiment, the reaction mixture includes bases other than potassium carbonate. Such base may be used in combination with the potassium carbonate. For example, the potassium carbonate and sodium carbonate may be used in combination.

The total concentration of bases in the reaction mixture is not particularly limited.

In one embodiment, the total blending amount of the bases in the reaction mixture is 100 parts by mole or more based on 100 parts by mole of hydroquinone to be blended in the reaction mixture, and 180 parts by mole or less, 160 parts by mole or less, 140 parts by mole or less, or 120 parts by mole or less. When the total blending amount of the bases is 100 parts by mole or more, a reaction time can be shortened. When the total blending amount of the bases is 180 parts by mole or less, the formation of the gel component can be suppressed. In addition, the total blending amount of the bases in the reaction mixture is, for example, 100 to 180 parts by mole, preferably 100 to 140 parts by mole, and more preferably 100 to 120 parts by mole, based on 100 parts by mole of hydroquinone to be blended in the reaction mixture.

In one embodiment, potassium carbonate is blended as a base in the above-described blending amounts.

A molar ratio ([DCBP]:[HQ]) of 4,4'-dichlorobenzophenone (DCBP) to hydroquinone (HQ) to be subjected to the reaction is not particularly limited.

The molar ratio ([DCBP]:[HQ]) may be appropriately adjusted in order to controll the molecular weight of the component (a-1') to be obtained.

In one embodiment, the molar ratio ([DCBP]:[HQ]) is 47.5:52.5 to 52.5:47.5, 48.0:52.0 to 52.0:48.0, 48.5:51.5 to 51.5:48.5, 49.0:51.0 to 51.0:49.0 or 49.5:50.5 to 50.5:49.5.

The number of moles of 4,4'-dichlorobenzophenone (DCBP) may be larger than, smaller than, or equal to the number of moles of hydroquinone (HQ).

In one embodiment, the total concentration (based on blending amount) of 4,4'-dicyclobenzofenone and hydroquinone in the reaction mixture is not specifically limited, for example, it is 1.0 mol/l or more, 1.2 mol/l or more, 1.3 mol/l or more, 1.4 mol/l or more, or 1.5 mol/l or more, and it is 6.0 mol/l or less, 5.0 mol/l or less, or 4.0 mol/l or less. In addition, the total concentration (based on blending amount) of 4,4'-dicyclobenzofenone and hydroquinone in the reaction mixture is, for example, 1.0 to 6.0 mol/l, preferably 1.3 to 5.0 mol/l, and more preferably 1.5 to 4.0 mol/l.

In one embodiment, no monomer other than 4,4'-dichlorobenzophenone and hydroquinone is used as a monomer to be subjected to the reaction described above.

In one embodiment, other monomer than 4,4'-dichlorobenzophenone and hydroquinone is used in combination in the above-described reaction as long as the effect of the present invention is not impaired.

In one embodiment, the total proportion of 4,4'-dichlorobenzophenone and hydroquinone (% by mass), based on total monomer to be subjected to the reaction, is 50% by mass or more, 60% by mass or more, 70% by mass or more, 80% by mass or more, 90% by mass or more, 95% by mass or more, 97% by mass or more, 99% by mass or more, 99.5% by mass or more, or 100% by mass.

In one embodiment, 70% by mass or more, 80% by mass or more, 90% by mass or more, 95% by mass or more, 99% by mass or more, 99.5% by mass or more, 99.9% by mass or more, or substantially 100% by mass of the reaction mixture at the time of the start of the reaction is formed of:
4,4'-dichlorobenzophenone, hydroquinone, an alkali metal salt, and the solvent;
4,4'-dichlorobenzophenone, hydroquinone, one or more of alkali metal salts selected from the group consisting of potassium carbonate and sodium carbonate, and diphenylsulfone; or
4,4'-dichlorobenzophenone, hydroquinone, potassium carbonate, and diphenylsulfone.
In the case of "substantially 100% by mass" thereof, inevitable impurity may be included therein.

The reaction of 4,4'-dichlorobenzophenone and hydroquinone can be performed in an inert gas atmosphere. The inert gas is not particularly limited, and examples thereof include nitrogen and an argon gas.

The method for producing the component (a-2') is not particularly limited.

In one embodiment, the method for producing the component (a-2') includes reacting 4,4'-difluorobenzophenone with hydroquinone.

The component (a-2') can also be produced in the same manner as the method for producing the component (a-1') described above, except that 4,4'-difluorobenzophenone is used instead of 4,4'-dichlorobenzophenone.

In one embodiment, the component (a-1') is the component (a-1).

In one embodiment, the component (a-2') is the component (a-2).

A mixtures of the component (a-1') and the component (a-2') can be used as the aromatic polyether. When the mixture is used, the mixing ratio (mass ratio) of the component (a-1') and the component (a-2') can be adjusted to be the aromatic polyether in which the amount of chlorine atom bonded is 10 to 10,000 ppm and the amount of fluorine atom bonded is 10 to 10,000 ppm.

The method of mixing the component (a-1') and the component (a-2') is not particularly limited, and examples thereof include mixing by a known mixer, and melting and kneading by an extruder or the like. Specifically, for example, the component (a-1') and the component (a-2') can be heated to 360°C to 440°C and melted, and then kneaded by a twin-screw kneader or the like. At this time, the component (a-1') and the component (a-2') may be kneaded to obtain the aromatic polyether, and then the inorganic filler may be kneaded together with the aromatic polyether, or the component (a-1'), the component (a-2'), and the inorganic filler may be kneaded together.

With respect to the mixing ratio of the component (a-1') and the component (a-2'), by increasing the ratio of the component (a-1'), the amount of chlorine atom bonded to the aromatic polyether in the mixture (aromatic polyether) can be increased, and the amount of fluorine atom bonded to the aromatic polyether can be decreased.

### (Inorganic filler)

In one embodiment, an inorganic filler includes one or more members selected from the group consisting of glass fiber and carbon fiber.

In one embodiment, the inorganic filler is in one or more forms selected from the group consisting of chopped strands, woven fabrics, non-woven fabrics, and unidirectional materials (also referred to as "UD materials"). As a result, the strength of the composition is further improved.

In one embodiment, the composition can be a fiber composite material including the aromatic polyether as a matrix and the inorganic filler as a reinforcing fiber. The fiber composite material may be a so-called fiber-reinforced thermoplastic (FRTP).

In one embodiment, when the inorganic filler is a fiber, the average fiber length is 0.5 to 20 mm, 0.5 to 10 mm, 1 to 7 mm or 2 to 6 mm. The average fiber length of the inorganic filler is determined by the arithmetic average of the values measured by calipers.

In one embodiment, when the inorganic filler is a fiber, the average fiber diameter thereof is 1 to 30 µm. From the viewpoint of dispersibility of the inorganic filler to the aromatic polyether and surface smoothness and mechanical strength of the molded article, the average fiber diameter of the inorganic filler is preferably 3 to 25 µm, or 6 to 20 µm, and more preferably 6 to 13 µm. The average fiber diameter of the inorganic filler is determined by arithmetic average of the values measured in accordance with JIS R 7607:2000.

The carbon fiber may be one treated with a sizing agent. By treating with a sizing agent, the inorganic filler can be united into a bundle shape. The inorganic filler treated with the sizing agent has a sizing agent adhered to the surface thereof. The sizing agent is not particularly limited, and examples thereof include an epoxy-based sizing agent, a urethane-based sizing agent, and a polyamide-based sizing agent. As a sizing agent, the aromatic polyether can also be used. As a sizing agent, it may be used alone, or two or more types thereof may be used in combination. As the inorganic filler, that is not treated with any sizing agent may be used. As the sizing agent, a silane coupling agent such as an aminosilane, an isocyanate silane and an acrylic silane may be used in combination.

The type of the glass fiber is not particularly limited, and, for example, glass fibers having various compositions such as E glass, low dielectric glass and silica glass can be selected and used depending on the purpose and application. A single fiber having an average fiber diameter of the glass fiber of preferably 5 to 20 µm and more preferably 7 to 17 µm can be used.

The glass fiber may also be treated with a sizing agent. By treating with a sizing agent, the glass fiber can be united in a bundle shape. The glass fiber treated with the sizing agent has a sizing agent adhered to the surface thereof. The sizing agent is not particularly limited, and examples thereof include an epoxy-based sizing agent, a urethane-based sizing agent, and a vinyl acetate-based sizing agent. As a sizing agent, the aromatic polyether can also be used. As the sizing agent, it may be used alone, or two or more types thereof may be used in combination. As the glass fiber, that is not treated with any sizing agent may be used. As the sizing agent, a silane coupling agent such as an aminosilane, an isocyanate silane and an acrylic silane may be used in combination.

The amount of the inorganic filler in the composition is not particularly limited.

In one embodiment, the amount of the inorganic filler is 5 parts by mass or more, 10 parts by mass or more, 20 parts by mass or more, 30 parts by mass or more, or 40 parts by mass or more, and it is 100 parts by mass or less, 90 parts by mass or less, 80 parts by mass or less, 70 parts by mass or less, 60 parts by mass or less, 55 parts by mass or less, or 50 parts by mass or less based on 100 parts by mass of aromatic polyether. In addition, in one embodiment, the amount of the inorganic filler is 5 to 100 parts by mass, 5 to 80 parts by mass, 5 to 60 parts by mass, 10 to 60 parts by mass, 20 to 55 parts by mass, 30 to 50 parts by mass, or 40 to 50 parts by mass based on 100 parts by mass of the aromatic polyether. When the amount of the inorganic filler based on 100 parts by mass of the aromatic polyether is 5 parts by mass or more, the reinforcing effect by the inorganic filler is more suitably obtained, and when the amount thereof is 100 parts by mass or less, or even 60 parts by mass or less, the suitability for kneading and forming the composition is further improved.

The composition may include components other than the aromatic polyether and the inorganic filler. The other component is not particularly limited, and examples thereof include other resins that are not aromatic polyether. Examples of the other resin include a fluororesin such as polytetrafluoroethylene. The other component may be used alone, or two or more types thereof may be used in combination.

In one embodiment, 50% by mass or more, 60% by mass or more, 70% by mass or more, 80% by mass or more, 90% by mass or more, 95% by mass or more, 97% by mass or more, 99% by mass or more, 99.5% by mass or more, and 100% by mass or less, 99.9% by mass or less, or substantially 100% by mass of the composition is formed of
the aromatic polyether and the inorganic filler; or
the aromatic polyether, the inorganic filler and the other component described above.
In the case of "substantially 100% by mass" thereof, inevitable impurities may be included.

A method of preparing the composition is not particularly limited, and examples thereof include mixing with a known mixer, and melting and kneading with an extruder or the like. It may be side-fed inorganic filler to the aromatic polyether using a twin-screw kneader.

A pellet of the composition may be produced. The pellet may be used as a raw material for producing a molded body.

In one embodiment, the method for producing the pellet includes the addition of the aromatic polyether to the inorganic filler after the inorganic filler has been cut short into chopped strands. The pellet (also referred to as "short fiber pellet") can be produced by mixing and granulating short fibers and the aromatic polyether.

In one embodiment, a method for producing the pellet is to produce the pellet (also referred to as "long fiber pellet") by immersion a roving of an inorganic filler in a melted aromatic polyether, pultrusion, and then cutting into desired pellet lengths. When the long fiber pellet is produced as described above, breakage of inorganic filler can be suppressed.

A molded article can be produced by molding the composition (that may be in the form of the above-described pellet) a. A known method such as injection molding, extrusion molding and blow molding may be used in the molding. In addition, the composition may be subjected to press molding, and a known method such as a cold pressing method and a hot pressing method may be used. Further, it may be performed that the composition is used as a resin composition for a 3D printer, and is molded with a 3D printer.

In one embodiment, the composition has a tensile strength of 1.75 times or more, more than 1.81 times, 1.82 times or more, 1.85 times or more, 1.90 times or more, or 1.95 times or more based on the tensile strength of the aromatic polyether alone. The upper limit of the rate (also referred to as "increase rate") is not particularly limited, and it is, for example, 5.00 times or less or 4.00 times or less. In one embodiment, the composition has a tensile strength of 1.75 to 5.00 times, 1.85 to 5.00 times or 1.90 to 4.00 times based on the tensile strength of the aromatic polyether alone.

Also, in one embodiment, the composition has a tensile strength of 1.65 to 5.00 times, 1.75 to 4.00 times, or 1.78 to 3.00 times based on the tensile strength of the aromatic polyether alone.

The tensile strength of the composition and the tensile strength of the aromatic polyether alone are measured by the following methods.

The composition (or the aromatic polyether alone) are injection molded at 400°C using a small molding machine (MiniJet-Pro, manufactured by Haake) to prepare a dumbbell-shaped 5A defined in ISO 527-2:2012, and used as a test piece.

The obtained test piece is subjected to a tensile test at a test speed of 5 mm/min and a chuck-to-chuck distance of 50 mm, and the tensile strength is measured.

To prepare for the tensile test, align the upper and lower chucks of the tensile testing machine with the position of the specified chuck-to-chuck distance (50 mm), hold the test piece with the lower chuck, and the load 0 point is adjusted. Thereafter, the test piece is held by the upper chuck, and the tensile test is started.

In one embodiment, the tensile strength of the composition is 160 MPa or more, 170 MPa or more, 180 MPa or more, 190 MPa or more, 198 MPa or more, 200 MPa or more, or 210 MPa or more. The upper limit of the tensile strength is not particularly limited, and is, for example, 400 MPa or less, 350 MPa or less, or 300 MPa or less. In one embodiment, the tensile strength is 160 to 400 MPa, 170 to 350 MPa or 198 to 300 MPa. In one embodiment, the tensile strength is 160.0 to 400.0 MPa, 168.0 to 350.0 MPa, 170.0 to 300.0 MPa or 175.0 to 250.0 MPa.

The application of the composition of the present invention is not particularly limited, and for example, can be widely applied to various applications requiring strength. For example, the composition of the present disclosure is suitable for applications requiring heat resistance, solvent resistance and durability. More specifically, the present invention is suitable for, for example, bearings, gaskets, structural materials, and the like.

A composition according to a second aspect of the present invention includes an aromatic polyether including the structural unit represented by formula (1) and the structural unit represented by formula (2), wherein the amount of the total chlorine (CI-3) in the aromatic polyether is 10 to 10,000 ppm by mass and the amount of the total fluorine (F-3) in the aromatic polyether is 10 to 10,000 ppm by mass, and
an inorganic filler.

According to the second aspect, the same effects as those of the first aspect can be obtained.

A composition according to a third aspect of the present invention includes an aromatic polyether including the structural unit represented by formula (1) and the structural unit represented by formula (2), wherein the proportion of the amount of the total chlorine (CI-3) in the aromatic polyether (also referred to as "proportion (Cl/ (Cl + F))") based on the total amount of the amount of the total chlorine (CI-3) in the aromatic polyether and the amount of the total fluorine (F-3) in the aromatic polyether is 40 to 95% by mass, and
an inorganic filler.

According to the third aspect, the same effects as those of the first aspect can be obtained.

In the third aspect, the proportion (Cl/ (Cl + F)) is preferably 40 to 95% by mass, or 50 to 90% by mass, and more preferably 60 to 85% by mass. In one embodiment, the proportion (Cl/ (Cl + F)) may be 40 to 60% by mass.

In the second aspect and the third aspect, the amount of the total chlorine in the aromatic polyether (CI-3) is preferably 100 to 10,000 ppm by mass, and the amount of the total fluorine in the aromatic polyether (F-3) is preferably 100 to 10,000 ppm by mass. As a result, the effects of the present invention can be better exhibited. The amount of the total chlorine in the aromatic polyether (Cl-3) and the amount of the total fluorine in the aromatic polyether (F-3) are not limited to the ranges exemplified here, and the ranges exemplified for the composition according to the first aspect can be appropriately applied.

With respect to the composition according to the second aspect and the third aspect, the description of the composition according to the first aspect is incorporated. However, the composition according to the second aspect and the third aspect is not limited to the composition according to the first aspect (that is, a composition includes an aromatic polyether including a structural unit represented by the formula (1) and a structural unit represented by the formula (2), wherein the amount of chlorine atom bonded is 10 to 10,000 ppm, and the amount of fluorine atom bonded is 10 to 10,000 ppm, and an inorganic filler). The composition according to the present invention may satisfy any two or more of the conditions of the first aspect, the second aspect and the third aspect. For example, a composition satisfying both the conditions of the first aspect and the second aspect, a composition satisfying both the conditions of the first aspect and the third aspect, a composition satisfying both the conditions of the second aspect and the third aspect, and a composition satisfying both the conditions of the first aspect, the second aspect, and the third aspect can be given.

### Examples

Examples of the present invention are described below, but the present invention is not limited to these Examples.

### 1. Preparing aromatic polyether

### Aromatic polyether (A-1)

4,4'-dichlorobenzophenone 41.220 g (0.164 mol), hydroquinone 17.809 g (0.162 mol), potassium carbonate 25.704 g (0.186 mol), and diphenylsulfone 140.01 g were placed in a 300 ml four-port flask equipped with a stirrer, a thermometer, a nitrogen inlet tube, and a water receive container connected to a cooler tube, and nitrogen gas was allowed to flow.

The reaction mixture was subjected to a reaction under the following temperature control.

### <Temperature control>

(1) After raising the temperature to 150°C, the temperature was raised to 200°C for 30 minutes
(2) Hold at 200°C for an hour
(3) Temperature was raised from 200°C to 250°C (temperature raising rate 1.7°C/min)
(4) Hold at 250°C for an hour
(5) Temperature was raised (temperature raising rate 3.0°C/min) from 250°C to 300°C (maximum temperature of the reaction mixture)
(6) Hold at 300°C (maximum temperature of the reaction mixture) for two hours

After the completion of the reaction, the product was pulverized with a blender (7010HS manufactured by Waring), and was washed with acetone and water in the stated order, followed by drying with a dryer at 180°C. Thus, a powdery PEEK was obtained.

The obtained PEEK was used as aromatic polyether (A-1).

### Aromatic polyether (A-2)

A commercially available PEEK (151G, Victrex) was used as aromatic polyether (A-2).

### 2. Preparation of composition

### (Example 1)

An aromatic polyether (A-1), an aromatic polyether (A-2), and an inorganic filler (manufactured by Nippon Electric Glass Co., Ltd., glass fiber, chopped strand ECS03 T-786H, average fiber diameter 10 µm, average fiber length 3 mm) were kneaded at 400°C using a twin-screw kneading machine (Process11, manufactured by Thermo Fisher Co., Ltd.) at a mass ratio (A-1:A-2: inorganic filler) of 20:80:43 to obtain a composition including an aromatic polyether (A-1), an aromatic polyether (A-2), and an inorganic filler.

### 3. Measurement method

### (1) Tensile strength

The obtained composition was injection molded at 400°C using a small molding machine (MiniJet-Pro, manufactured by Haake), to prepare a dumbbell-like 5A defined in ISO 527-2:2012, and used as a test piece.

The obtained test piece was subjected to a tensile test at a test speed of 5 mm/min and a chuck-to-chuck distance of 50 mm, and the tensile strength (also referred to as "reinforced product tensile strength") was measured.

In order to prepare for the tensile test, the upper and lower chucks of the tensile testing machine were adjusted to the position of the specified chuck-to-chuck distance (50 mm), the test piece was held by the lower chuck, and the load 0 point was adjusted. Thereafter, the test piece was held by the upper chuck, and the tensile test was started.

In addition, the tensile strength (also referred to as "neat tensile strength") of the aromatic polyether (A) alone (neat) without any blending glass fibers was measured in the same manner as described above.

Further, the increase rate of the reinforced product tensile strength based on the neat tensile strength (also referred to as "reinforced product/neat increase rate") was calculated.

### (2) Determination of amounts of chlorine atom and fluorine atom bonded to aromatic polyether

The amount of chlorine atom (CI-1) bonded to the aromatic polyether, the amount of chlorine atom contained as free components in the aromatic polyether (CI-2, also referred to as "amount of inorganic chlorine") and the total amount of these chlorine atom (CI-3, also referred to as "amount of the total chlorine in the aromatic polyether") were determined by the following methods. In addition, the amount of fluorine atom (F-1) bonded to the aromatic polyether, the amount of fluorine atom contained as a free component in the aromatic polyether (F-2, also referred to as "amount of inorganic fluorine") and the total amount of these fluorine atom (F-3, also referred to as "amount of the total fluorine in the aromatic polyether") were also determined. Additionally, the amount of potassium atom and the amount of sodium atom contained as free components in the aromatic polyether were determined.

### <Calculation of amount of chlorine atom bonded to aromatic polyether (Cl-1)>

a. The amount of the total chlorine in the aromatic polyether (*1: described below) is measured, and the amount of the total chlorine (ppm by mass) (CI-3) is calculated.
b. The amount of potassium (ppm by mass) in the aromatic polyether is calculated from the measured value of potassium amount (*2: described below), and the amount of the inorganic chlorine (ppm by mass) (CI-2) is calculated by assuming that the equivalent number of moles of inorganic chlorine (the chlorine atom not bonded to the aromatic polyether) to potassium is included.
c. The amount of inorganic chlorine (ppm by mass) (CI-2) is subtracted from the amount of the total chlorine (ppm by mass) (CI-3) to calculate the amount of chlorine atom bonded to the aromatic polyether (ppm by mass) (CI-1).

### <Calculation of amount of fluorine atom bonded to aromatic polyether (F-1)>

a. The amount of the total fluorine (*1: described below) in the aromatic polyether is measured, and the amount of the total fluorine (ppm by mass) (F-3) is calculated.
b. The amount of sodium (ppm by mass) in the aromatic polyether is calculated from the measured value of sodium amount (*2: described below), and the amount of the inorganic fluorine (ppm by mass) (F-2) is calculated by assuming that the equivalent number of moles of inorganic fluorine (the fluorine atom not bonded to the aromatic polyether) to sodium is included.
c. The amount of inorganic fluorine (ppm by mass) (F-2) is subtracted from the amount of the total fluorine (ppm by mass) (F-3) to calculate the amount of fluorine atom bonded to the aromatic polyether (ppm by mass) (F-1).

### (*1) Methods for measuring total amount of chlorine (CI-3) and total amount of fluorine (F-3) in aromatic polyether

A sample (aromatic polyether) was introduced into a combustion furnace, combusted in a combustion gas containing oxygen, and the generated gas is collected in an absorbent, and then the absorbent was separated and quantified by ion chromatography. The quantitative values were each determined based on a calibration curve produced from a reference having a known concentration. Measurement conditions were described below.

### <Sample combustion>

Combustion apparatus: AQF-2100H manufactured by Nittoseiko Analytech Co., Ltd.
Combustion furnace preset temperature: 800°C on the front stage and 1,100°C on the rear stage
Argon flow rate: 400 ml/min
Oxygen flow rate: 200 ml/min
Absorbent: hydrogen peroxide solution

### <Ion chromatograph>

Analyzer: Integrion manufactured by Thermo Fisher Scientific Inc.
Column: Using (Dionex IonPac AG12A) as a guard column and (Dionex IonPac AS12A) as a separating column (both columns are manufactured by Thermo Fisher Scientific Inc.)
Eluent: Na₂CO₃ (2.7 mmol/l)+NaHCO₃ (0.3 mmol/l)
Flow rate: 1.5 ml/min
Column temperature: 30°C
Measurement mode: A suppressor system
Detector: An electric conductivity detector

### (*2) Determination of amount of potassium and amount of sodium in aromatic polyether (amount of potassium atom and amount of sodium atom included as free components in aromatic polyether)

Each amount of potassium atom (K) and sodium atom (Na) in the aromatic polyether pretreated with the following manner is measured at 589.592 nm for Na and at 766.481 nm for K by ICP emission spectroscopy.

The sample 1 g is weighed to the platinum dish, concentrated sulfuric acid is added to the dish, heated to carbonization treatment, and then the platinum dish is placed in an electric oven for ashing treatment at 550°C for 12 hours.

After the ashing treatment, hydrochloric acid is added, and then heat treatment is performed. After cooling, ultrapure water is added thereto to make a constant volume. When the sample contains an inorganic filler, hydrofluoric acid is added after the ashing treatment, and then the sample is heated and dried treatment, allowed to cool, hydrochloric acid is added, and heat treatment is performed. After cooling, ultrapure water is added thereto to make a constant volume.

The quantitative values are each determined based on a calibration curve produced from a reference having a known concentration. The calibration curve solution shall be the same as the hydrochloric acid concentration of the sample solution.

It should be noted that "-" in Table 1 indicates 6 ppm by mass or less with respect to the above measured values.

### (Supplementary studies)

In view of the possibility that 4,4'-difluorobenzophenone or 4,4'-dichlorobenzophenone, which was the monomer (reactant) used in the synthesis, remained in the aromatic polyether, the amount of fluorine atom contained in the aromatic polyether as 4,4'-difluorobenzophenone and the amount of chlorine atom contained in the aromatic polyether as 4,4'-dichlorobenzophenone were determined by the following methods.

First, a solid-state sample (aromatic polyether) was ground in a blender, washed with acetone and water in this order, and dried in an explosion-proof dryer at 180°C. When a reaction mixture (product) immediately after a reaction for the production of the aromatic polyether is used as a sample, the product is cooled and solidified after the completion of the reaction to be used as the solid sample. The blender used is not particularly limited, and a 7010HS manufactured by Waring was used here.

Then, the dried sample 1 g was weighed in an eggplant flask, and cyclohexanone 100 ml and boiling stone were added thereto, and the mixture was heated to reflux for an hour with a mantle heater, allowed to cool to room temperature, and the solid content was removed by filtration.

The obtained solutions were then measured by gas chromatography to calculate the amount (ppm by mass) of 4,4'-difluorobenzophenone and the amount (ppm by mass) of 4,4'-dichlorobenzophenone in the sample. Here, the amount (ppm by mass) of 4,4'-difluorobenzophenone and the amount (ppm by mass) of 4,4'-dichlorobenzophenone in the sample were determined based on a calibration curve prepared from a reference of a known concentration. Measurement conditions of gas chromatograph are described below.

### <Measurement conditions of gas chromatography>

Analyzer: Agilent Technologies 8890
GC column: Agilent Technologies DB-HeavyWAX (length 30 m, internal diameter 0.25 mm, film thicknesses 0.25 µm)
Inlet temperature: 250°C
Oven temperature: 250°C (constant)
Flow rate: 1 ml/min
Injection amount: 1 µl
Split ratio: 40:1
Detector: FID
Detector temperature: 250°C

The amount of fluorine atom (ppm by mass) contained as 4,4'-difluorobenzophenone and the amount of chlorine atom (ppm by mass) contained as 4,4'-dichlorobenzophenone in the aromatic polyether were converted from the following calculation formula. The amount of fluorine atom (ppm by mass) contained in the aromatic polyether as 4,4'- difluorobenzophenone = the amount of 4,4'-difluorobenzophenone in the sample (ppm by mass)/218.20 (molecular weight of 4,4'-difluorobenzophenone) × 19.00 (atomic weight of fluorine) × 2 The amount of chlorine atom (ppm by mass) contained in the aromatic polyether as 4,4'- dichlorobenzophenone = the amount of 4,4'-dichlorobenzophenone in the sample (ppm by mass)/251.11 (molecular weight of 4,4'-dichlorobenzophenone) × 35.45 (atomic weight of chlorine) × 2

As a result of the above supplementary test, it was confirmed that because the amount of fluorine atom (ppm by mass) contained in the aromatic polyether as 4,4'-difluorobenzophenone and the amount of chlorine atom (ppm by mass) contained in the aromatic polyether as 4,4'-dichlorobenzophenone were both less than 100 ppm by mass which is the lower limit of quantitation, the calculation result of the amount of chlorine atom bonded to the aromatic polyether (CI-1) and the amount of fluorine bonded to the aromatic polyether (F-1) described above was not affected.

Also, the proportion of the amount of the total chlorine (CI-3) in the aromatic polyether based on the total amount of the amount of the total chlorine (CI-3) in the aromatic polyether and the amount of the total fluorine (F-3) in the aromatic polyether ("proportion (CI/ (Cl + F))") was calculated from the amount of the total fluorine (F-3) and the amount of the total chlorine (CI-3) in the aromatic polyether.

### (3) Measurement ¹H-NMR (Area ratio X)

¹H-NMR of aromatic polyether (A) used in the composition was measured in the following manner.

PEEK was subjected to ¹H-NMR measurement, and the ratio (area ratio X) of the area of the peak at the α-position of the hydroxyl group (the area from the chemical shift 6.98 ppm to 7.03 ppm) to the area of the main chain peak (the area from the chemical shift 7.32 ppm to 7.36 ppm) was determined from the following equation. Area ratio X [%] = (area of peak at α-position of hydroxy group/area of main chain peak) × 100

Measurement conditions of ¹H-NMR measurement are as follows.

### <Measurement conditions of ¹H-NMR>

· NMR apparatus: Ascend 500 manufactured by Bruker Japan
· Probe: 5 mmφ TCI cryoprobe
· NMR sample tube diameter: 5 mmφ
· Preparation of sample solution: Methanesulfonic acid was 0.6 ml added to about 20 mg of the sample, the mixture was stirred at room temperature for an hour, then deuterated dichloromethane 0.4 ml was added, and the mixture was further stirred at room temperature for 30 minutes to dissolve the sample. Thus, the sample solution was obtained.
· Observation range: 20 ppm
· Observation center: 6.175 ppm
· Number of data points: 64 KB
· Pulse repetition time: 10 s
· Cumulated number: 256 times
· Flip angle: 30°
· Measurement temperature :25°C
· Chemical shift reference: The position of a central peak out of the 3 peaks of deuterated dichloromethane is set to 5.32 ppm.

The above results are shown in Table 1.

### (Example 2)

The composition was obtained in the same manner as in Example 1, except that aromatic polyethers (A-1) and (A-2) as the aromatic polyether (A) were blended at a mass ratio (A-1:A-2) of 40:60 and then used. The obtained composition was measured in the same manner as in Example 1. The results are shown in Table 1.

### (Example 3)

The composition was obtained in the same manner as in Example 1, except that aromatic polyethers (A-1) and (A-2) as the aromatic polyether (A) were blended at a mass ratio (A-1:A-2) of 60:40 and then used. The obtained composition was measured in the same manner as in Example 1. The results are shown in Table 1.

### (Example 4)

The composition was obtained in the same manner as in Example 1, except that aromatic polyethers (A-1) and (A-2) as the aromatic polyether (A) were blended at a mass ratio (A-1:A-2) of 80:20 and then used. The obtained composition was measured in the same manner as in Example 1. The results are shown in Table 1.

### (Comparative Example 1)

The composition was obtained in the same manner as in Example 1, except that aromatic polyethers (A-1) and (A-2) as the aromatic polyether (A) were used at a mass ratio (A-1:A-2) of 0:100 (the aromatic polyether (A-1) was omitted). The obtained composition was measured in the same manner as in Example 1. The results are shown in Table 1.

### (Comparative Example 2)

The composition was obtained in the same manner as in Example 1, except that aromatic polyethers (A-1) and (A-2) as the aromatic polyether (A) were used at a mass ratio (A-1: A-2) of 100:0 (the aromatic polyether (A-2) was omitted). The obtained composition was measured in the same manner as in Example 1. The results are shown in Table 1.

**Table 1**

| | Comparative Example 1 | Example 1 | Example 2 | Example 3 | Example 4 | Comparative Example 2 |
|---|---|---|---|---|---|---|
| A-1: A-2 [mass ratio] | 0:100 | 20:80 | 40:60 | 60:40 | 80:20 | 100:0 |
| Amount of chlorine atom (Cl-3) [ppm by mass] | - | 1500 | 2400 | 3400 | 4700 | 5800 |
| Amount of potassium atom [ppm by mass] | - | 26 | 44 | 66 | 83 | 100 |
| Amount of chlorine atom (Cl-1) [ppm by mass] | - | 1480 | 2360 | 3340 | 4620 | 5710 |
| Amount of fluorine atom (F-3) [ppm by mass] | 1700 | 1400 | 1100 | 700 | 340 | - |
| Amount of sodium atom [ppm by mass] | 130 | 95 | 75 | 56 | 29 | - |
| Amount of fluorine atom (F-1) [ppm by mass] | 1590 | 1320 | 1040 | 650 | 320 | - |
| Proportion (Cl/(Cl+F)) [% by mass] | Less than 1 | 52 | 69 | 83 | 93 | More than 99 |
| Area ratio X [%] | Less than 0.1 | Less than 0.1 | Less than 0.1 | Less than 0.1 | Less than 0.1 | Less than 0.1 |
| Reinforced product tensile strength [MPa] | 159.6 | 167.4 | 175.3 | 174.9 | 181.1 | 167.6 |
| Neat tensile strength [MPa] | 97.1 | 97.8 | 95.9 | 98.1 | 101.3 | 105.0 |
| Reinforced product/neat increase rate [-] | 1.64 | 1.71 | 1.83 | 1.78 | 1.79 | 1.60 |

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

The documents described in the specification and the specification of Japanese application(s) based on which the present application claims Paris convention priority are incorporated herein by reference in its entirety.

## Claims

1. A composition comprising an aromatic polyether which comprises a structural unit represented by the following formula (1) and a structural unit represented by the following formula (2), wherein the amount of chlorine atom bonded is in the range of 10 to 10,000 ppm by mass and the amount of fluorine atom bonded is in the range of 10 to 10,000 ppm by mass, and
an inorganic filler:

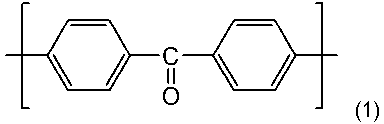

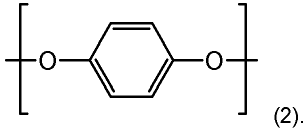

2. The composition according to claim 1, wherein the aromatic polyether comprises an aromatic polyether (a-1) to which the chlorine atom is bonded and an aromatic polyether (a-2) to which the fluorine atom is bonded.

3. The composition according to claim 1 or 2, wherein the aromatic polyether comprises an aromatic polyether (a-1') formed with 4,4'-dichlorobenzophenone as a monomer component and an aromatic polyether (a-2') formed with 4,4'-difluorobenzophenone as a monomer component.

4. The composition according to any one of claims 1 to 3, wherein the aromatic polyether comprises a repeating unit represented by the following formula (3):

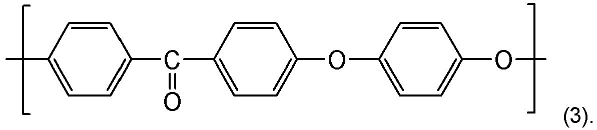

5. The composition according to any one of claims 1 to 4, wherein the average fiber length of the inorganic filler is 0.5 to 20 mm.

6. The composition according to any one of claims 1 to 5, wherein the amount of the inorganic filler is 5 to 100 parts by mass based on 100 parts by mass of the aromatic polyether.

7. The composition according to any one of claims 1 to 6, wherein the tensile strength thereof is greater than 1.81 times based on the tensile strength of the aromatic polyether alone.

8. The composition according to any one of claims 1 to 6, wherein the tensile strength thereof is 1.65 to 5.00 times based on the tensile strength of the aromatic polyether alone.

9. A composition comprising an aromatic polyether which comprises a structural unit represented by the following formula (1) and a structural unit represented by the following formula (2), wherein the amount of the total chlorine in the aromatic polyether is 10 to 10,000 ppm by mass and the amount of the total fluorine in the aromatic polyether is 10 to 10,000 ppm by mass, and
an inorganic filler:

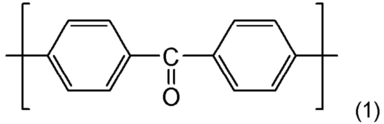

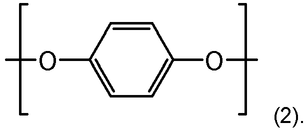

10. A composition comprising an aromatic polyether which comprises a structural unit represented by the following formula (1) and a structural unit represented by the following formula (2), wherein the proportion of the amount of the total chlorine in the aromatic polyether based on the total amount of the amount of the total chlorine in the aromatic polyether and the amount of the total fluorine in the aromatic polyether is 40 to 95% by mass, and
an inorganic filler:

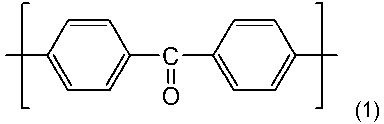

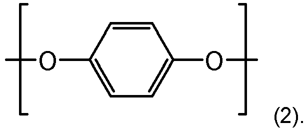

11. The composition according to claim 9 or 10, wherein the amount of the total chlorine in the aromatic polyether is 100 to10,000 ppm by mass and the amount of the total fluorine in the aromatic polyether is 100 to 10,000 ppm by mass.

12. The composition according to any one of claims 9 to 11, wherein the aromatic polyether comprises a repeating unit represented by the following formula (3):

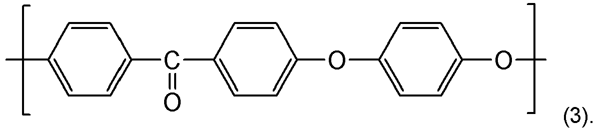

13. The composition according to any one of claims 9 to 12, wherein the average fiber length of the inorganic filler is 0.5 to 20 mm.

14. The composition according to any one of claims 9 to 13, wherein the amount of the inorganic filler is 5 to 100 parts by mass based on 100 parts by mass of the aromatic polyether.

15. The composition according to any one of claims 9 to 14, wherein the tensile strength thereof is greater than 1.81 times based on the tensile strength of the aromatic polyether alone.

16. The composition according to any one of claims 9 to 14, wherein the tensile strength thereof is 1.65 to 5.00 times based on the tensile strength of the aromatic polyether alone.
